# EUROPEAN PATENT SPECIFICATION

(11) **EP 2 472 519 B1**
(45) Date of publication and mention of the grant of the patent: **13.12.2017**
(21) Application number: 12150056.5
(22) Date of filing: 03.01.2012
(51) Int. Cl.: G11B 27/34, G11B 27/10, H04N 21/44, H04N 21/431

(54) **Multi-video rendering for enhancing user interface usability and user experience**
Mehrfachvideowiedergabe zur Verbesserung der Benutzerschnittstellenbrauchbarkeit und der Benutzererfahrung
Rendu multi-vidéo pour améliorer l'utilisation d'interface utilisateur et l'expérience de l'utilisateur

(30) Priority: 04.01.2011 US 201161429500 P; 08.09.2011 US 201113227783; 26.12.2011 KR 20110142087
(43) Date of publication of application: 04.07.2012
(73) Proprietor: Samsung Electronics Co., Ltd., Suwon-si, Gyeonggi-do, 443-742 (KR)
(72) Inventor: Shirron, Dan, Europark Yaqum Iarael (IL); Bareli, Reuben, Europark Yaqum Iarael (IL); Toledano, Eyal, Europark Yaqum Iarael (IL); Dotan, Benjamin, Europark Yaqum Iarael (IL); Haviv, Elad, Europark Yaqum Iarael (IL)
(74) Representative: HGF Limited

(56) References cited:
- EP-A1- 1 986 193
- EP-A1- 2 034 487
- EP-A1- 2 180 700
- WO-A1-2009/136236
- US-A1- 2010 054 713
- US-A1- 2010 247 064
- US-A1- 2010 272 187

## Description

### BACKGROUND OF THE INVENTION

### 1. Field of the Invention

The present invention relates to the field of the video processing. More particularly, the invention relates to the simultaneous display of a plurality of video streams on a single display.

### 2. Description of the Art

Many devices are nowadays equipped with video displaying capabilities, starting with personal computers and laptops, and including digital personal assistants, cellular phones, digital tablets and the like. Movies, and video in general, are selected from menus that show digital information regarding them. However, current UIs only offer static images and title to represent the different movies or other objects. Prior art user interfaces only reveal a single frame from the movie, which is generated by the device (and in some instances can be selected by the user), and this presents a problem because the information that can be retrieved from a single frame is limited and insufficient. For example, commercial movies always start with a studio logo and hence a number of movies can have the same thumb. Another example is if the thumb is chosen from a time in which there is no significant information in the picture. In such cases, it is likely that the user will look for further sources of information before choosing his favorite movie, or will start playing the specific movie and watch part of in order to learn more about it. This process naturally takes time and is inefficient.

EP-2034487-A1 discloses a method for generating thumbnails for video files includes receiving one or more parameters associated with a plurality of thumbnails to be displayed simultaneously and a plurality of frames for each thumbnail. The plurality of frames for each thumbnail are extracted from one or more video files. The frames for each thumbnail are stored in a corresponding buffer and/or can be displayed by retrieval from the buffer. The plurality of frames for each thumbnail can be displayed simultaneously. A device includes one or more decoders for decoding one or more video files, a processor for generating a plurality of thumbnails from the one or more video files by extracting a plurality of frames for each thumbnail using one or more parsers, and a storage unit in communication with the processor for storing the plurality of frames for each thumbnail.

It is an aim of an embodiment of the invention to provide a method for simultaneously displaying a plurality of segments playing from the same video and to enable selecting therefrom the segment that the user wishes to play in an enlarged or full-screen.

Other objects and advantages of the invention will become apparent as the description proceeds.

### SUMMARY OF THE INVENTION

According to a first aspect of the invention there is provided a user interface wherein in response to a user watching a video and pressing a screen a plurality of video sub-streams is simultaneously played on the screen for the purpose of allowing a user to select a desired video sub-stream; wherein the plurality of simultaneously played video sub-streams comprises segments of a video taken from different time points such that the plurality of simultaneously played video sub-streams comprise a timeline preview and the video is played in the background of the timeline preview; wherein if one of the simultaneously played video sub-streams is touched by a user and swiped in a first direction, the video is played on the screen starting from the time point of that video sub-stream and the timeline preview is no longer displayed; wherein the simultaneously played video sub-streams are arranged in the timeline preview in the order of their time points within the video and the different time points are spaced apart within the video by a first amount of time; and wherein if one of the simultaneously played video sub-streams is pressed by a user and not swiped the timeline preview is arranged to be zoomed such that the first amount of time is reduced to a second amount of time smaller than the first amount of time while the timeline preview is displayed on the screen.

According to a second aspect of the invention there is provided a method for providing a user interface, the method comprising: playing a video; receiving a user input pressing a screen; simultaneously playing on a screen a plurality of video sub-streams for the purpose of allowing a user to select a desired video sub-stream; wherein the plurality of simultaneously played video sub-streams comprises segments of a video taken from different time points such that the plurality of simultaneously played video sub-streams comprise a timeline preview and the video is played in the background of the timeline preview; wherein the method further comprises receiving a user touch input on one of the simultaneously played video sub-streams, the user touch input being which swiped in a first direction, playing the video on the screen starting from the time point of that video sub-stream and no longer displaying the timeline preview; wherein the simultaneously played video sub-streams are arranged in the timeline preview in the order of their time points within the video and the different time points are spaced apart within the video by a first amount of time; and wherein if one of the simultaneously played video sub-streams is pressed by a user and not swiped the method further comprises zooming the timeline preview by reducing the first amount of time to a second amount of time smaller than the first amount of time while the timeline preview is displayed on the screen.

### BRIEF DESCRIPTION OF THE DRAWINGS

In the drawings:
Fig. 1 shows an example of a Live Video Gallery;
Fig. 2 shows an example of Live Chapter selection;
Fig. 3 illustrates a timeline preview display;
Fig. 4 is a flowchart of a user interface according to an embodiment of the invention;
Fig. 5 shows an example of a Live Contact List; and
Fig. 6 illustrates the operation of the hardware decoder.

### DETAILED DESCRIPTION OF THE INVENTION

Displaying multi videos simultaneously on screen can enhance the efficiency of the user interface (UI), as well as the user experience. Thus, when searching for a specific movie in a video gallery, the multi-display effect enables the user a preview of several movies playing simultaneously. This provides the user with more information about each movie, compared to current known image thumbnail, and assists the user in choosing the movie he wants to view.

The live thumb contains much more information regarding the movies in the gallery, and hence can make it easier for the user to make his selection. In addition to that, the live content is much more appealing than a static content and creates a better user experience.

The invention allows parallel decoding of many streams or parallel decoding of different time zones of the same stream, and displaying them all at once on the screen of the user.

Since the hardware decoding resources are limited to a number of decoding instances it is possible to decode a limited number of movies in parallel. Each instance is capable of only decoding one movie. In order to bypass this limitation a multiplexing and buffering technique is used. This is illustrated by the following simple example of a case where a single instance hardware decoder is used for decoding three H264 coded movies. Originally this decoder is meant to decode one movie. According to the invention each movie stream is split into substreams. Each substream contains 1 I-frame and subsequent frames until the next I-frame, and hence switching between different movies is possible. At the output of the decoder the resulting raw movie is then split back into three output streams. If the hardware decoder is not capable of changing its initial parameters (resolution, codec etc.) fast enough, an option is to decode and encode part of each movie off-line, to a preselected format and resolution. In such a case the decoder does not need to re-initialize between different movies.

Using the above method inflicts a certain delay to the movie rendering. The delay can be calculated by multiplying the time it takes the decoder to decode a substream by 2 and adding the time it takes to decode an I-frame.

The number of movies that can be decoded simultaneously depends on many parameters such as the input and output resolution, the movie format, and the decoding efficiency. The skilled person will easily determine the number of simultaneously decodable movies, based on the hardware available to him. For example, when using a Samsungs S5PC110 device it was possible to decode 12 movies with source resolution of 480x270 to an output resolution of 200x120. Note that the small output resolution is enough since many movies are displayed on the same screen simultaneously.

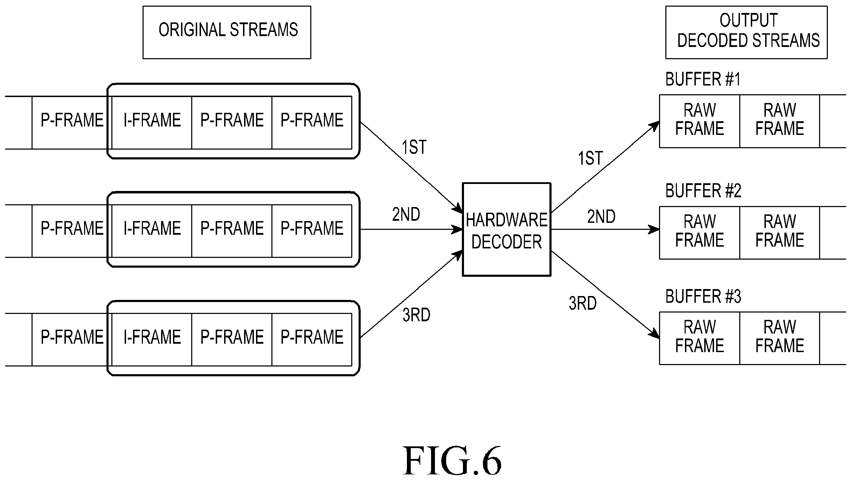

The above is schematically illustrated in Fig. 6. The following steps take place during operation of the decoder in multi-stream mode (still referring to Fig. 6), only three movies being considered, for the sake of brevity:
1) The hardware decoder is initialized to handle the first movie (movie parameters such as resolution and codec are used).
2) The first substream of the first movie is sent to the hardware decoder. It is written frame by frame to the decoder.
3) The resulting raw images are stored in output buffer #1shown in Fig. 6.
4) The hardware decoder is initialized to handle the second movie (movie parameters such as resolution and codec are used).
5) The first substream of the second movie is sent to the hardware decoder. Again, each frame is written to the decoder.
6) The resulting raw images are stored in output buffer #2 shown in Fig. 6.
7) The hardware decoder is initialized to handle the third movie (movie parameters such as resolution and codec are used).
8) The first substream of the third movie is sent to the hardware decoder.
9) The resulting raw images are stored in output buffer #3 shown in Fig. 6.
10) Once the first frame of output buffer 3 is ready, the rendering of the three movies can start. This limitation inflicts a latency to the process. The latency can be calculated by adding 2 times the decoder processing time for two sub-streams and in addition decoding of the I-frame of the third movie's sub-stream.
11) The process moves back to Step 1 above, but this time the second sub stream of each movie is decoded, and the process continues recursively.

In order to perform according to the method of the invention the decoder must be fast enough in order to decode at a frame rate which is faster than the sum of all movies' FPS (frames per second). For example if the three movies are at 30 FPS the decoder must be able to decode at a frame rate of 3x30=90 FPS. In some cases an off-line preparation of a "lighter" (faster codec, lower resolution etc.) version of the movie or a part of it is needed in order to allow the above limitation.

Hence the invention allows the user to benefits from more informative data regarding the movies in his gallery, and from a more appealing GUI. In addition, by virtue of the invention, the user has the option to control the speed of rendering of the different streams. Thus, a user can select among real time/fast/slow speed independently for each movie displayed. Furthermore, according to the invention the user has the option to combine live thumbs with static thumbs in the same GUI.

Thus, for example a media gallery can include live thumbs for videos and static thumbs for still images.

The technical features of the invention include:
- A Hardware/Software engine that allows the user to render multiple video streams concurrently;
- Each stream outputs to a specified buffer;
- An Engine that allows movie pre-processing transcoding in order to allow decoding bandwidth for a desired GUI design. For example if we have a video gallery and want to display 12 full HD (1920x1080 resolution) movies simultaneously. The hardware engine resources are not capable of parallel decoding of 12 full HD movies but it will be possible to decode 12 "small" (240x180) movies. The pre-processing engine transcodes the 12 movies from high resolution to low resolution and the GUI will then use the smaller resolution sources. Note that since we display all 12 movies at the same time on the screen, the actual displayed resolution is low and hence the full HD resolution is not needed.
- The GUI designer (who is the primary addressee of this invention and who will design a GUI using it) can add/remove streams dynamically
- The GUI designer stream's current play position
- The GUI designer stream's rendering speed
- The GUI designer can choose to make the thumb live or still based on the battery state of the device (Since the power consumption increases for live rendering)

### Live Video Gallery

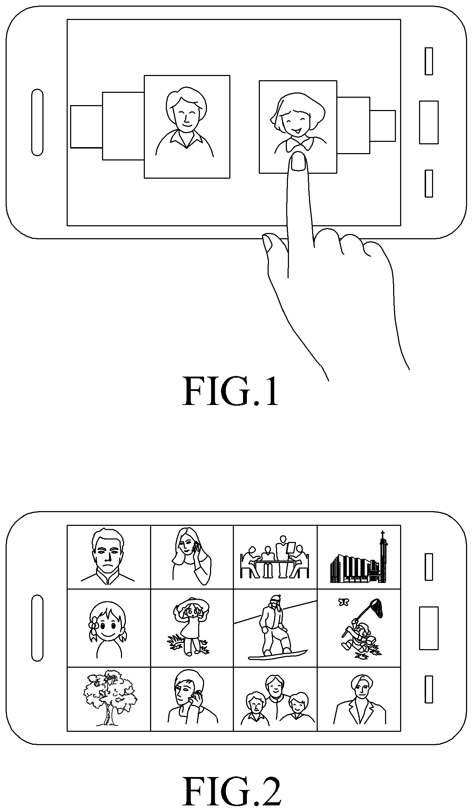

Fig. 1 is an example of a Live video gallery. The thumbs shown in the figure are not static but rather the movie is playing in them. The Live video gallery allows a user to simultaneously watch various movies displayed on the screen and to obtain more information about each of the movies at the same time. In the example of Fig. 1 swiping the finger over the movies scrolls through the different movies. Touching one of the preview thumbs opens that specific movie in the video player.

### Live chapter (time based) selection UI

Fig. 2 illustrates a different situation in which it is desired to select a chapter from a single movie. It should be noted that the thumbs shown in the figure are not static but are playing simultaneously. Simultaneous and parallel streaming of different chapters from the same video is performed as described above. Accordingly, the user gets to see a short segment from each chapter and is therefore able to select the appropriate chapter on the basis of much richer information than that which is supplied by a static thumb. Touching a specific scene opens the movie in the default movie player and in the specific desired chapter.

Swiping the finger over the screen scrolls the displayed chapters to right or left according to the direction of the swipe. A pinch or spread of two fingers zooms in or out, to/from the point of pinch.

### Live Forward/Rewind

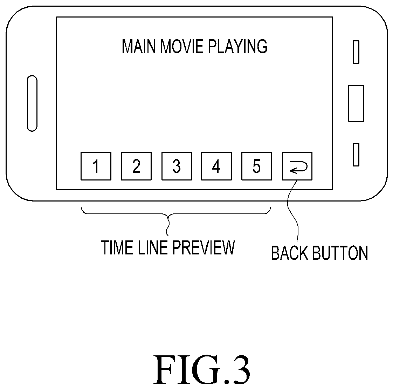

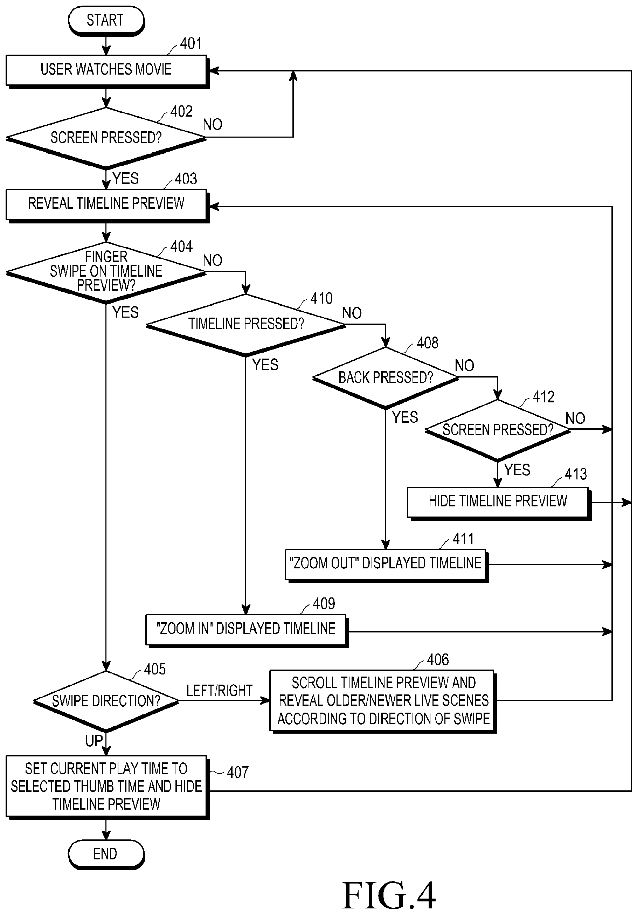

The invention is an efficient way of performing Forward and Rewind operations. This is illustrated in Figs. 3 and 4. In
this example once the user watches a movie in the video player he is able to browse through the movies time line with live Forward/Rewind.

UI Flow Chart
The flow chart shown in Fig. 4 describes an example of a user interface. At the beginning the user watches a movie. If he wants to watch a different time line in the movie he first presses the screen. This, in turn, reveals the "time line preview" schematically shown in Fig. 3, which shows small live thumbs of the played movie but in different time. In parallel the movie is still played in the background. For example the live thumb marked in Fig. 3 as 1 can show the movie from 10 min ago, #2 will show the movie 5 minutes ago, #3 will show the movie at the current time, #4 will show 5 minutes ahead and #4 will show 10 minutes ahead. The initial "time grid" in the example is 5 minutes.

If the user swipes his finger over the time preview area the thumbs scrolls and reveals past/future scenes in jumps of 5 minutes. A swipe to the left reveals future thumbs and a swipe to the right past thumbs. For example if the user swipes 2 thumbs to the left the displayed live thumbs will show the current time at thumb #1, 5 minutes ahead at #2, 10 minutes ahead at #3, 15 minutes ahead at #4, 20 minutes ahead at #5.

If the user wants to change the time grid he can press one of the thumbs. This will decrease the time grid by half, e.g. the time between each thumb displayed will be 2.5 minutes instead of 5 minutes, and will make the center preview thumb render the time that was of the pressed thumb. If in the above example the user presses thumb #5 which after scrolling displayed 20 minutes ahead, the new time preview will include the following thumbs:
At preview thumb #1 - 15 minutes ahead
At preview thumb #2 - 17.5 minutes ahead
At preview thumb #3 - 20 minutes ahead.
At preview thumb #4 - 22.5 minutes ahead
At preview thumb #5 - 25 minutes ahead

This means the actual time grid is 2.5 minutes.

Another option to change the time grid is to press the back button which sets the time grid back to its last value.

If the user found the time position he wants to watch in one of the thumbs he needs to swipe his finger up on that thumb. The current play time will jump to the time position of the selected thumb and the time line preview will be hidden.

### Live Contact List

The parallel decoding of streams may also be used to enhance the contact list by creating a "Live Contact List". Instead of having a static image next to a name on the contact list, the user can take a short video of that person and use it in a list. The UI allows the user to simultaneously see movies that shows each contact. This makes the contact list application much more appealing to the user. Swiping the finger up or down on screen will scroll through the different contacts. Selection of the contact will show the contacts details and will allow various options as in current contacts application.

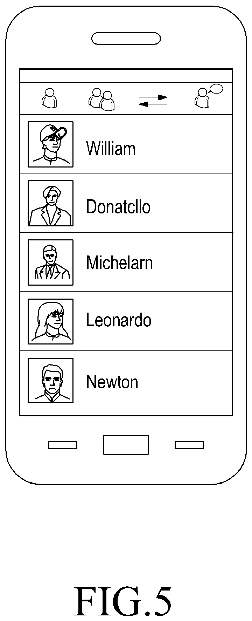

This option is illustrated in Fig. 5, which, of course, the thumb shown are running each its own short video, and are not static thumbs.

## Claims

1. A user interface wherein in response to a user watching (401) a video and pressing (402) a screen a plurality of video sub-streams is simultaneously played (403) on the screen for the purpose of allowing a user to select a desired video sub-stream;
wherein the plurality of simultaneously played video sub-streams comprises segments of a video taken from different time points such that the plurality of simultaneously played video sub-streams comprise a timeline preview and the video is played in the background of the timeline preview;
wherein if one of the simultaneously played video sub-streams is touched by a user and swiped in a first direction, the video is played (407) on the screen starting from the time point of that video sub-stream and the timeline preview is no longer displayed;
wherein the simultaneously played video sub-streams are arranged in the timeline preview in the order of their time points within the video and the different time points are spaced apart within the video by a first amount of time; and
wherein if one of the simultaneously played video sub-streams is pressed (410) by a user and not swiped the timeline preview is arranged to be zoomed (409) such that the first amount of time is reduced to a second amount of time smaller than the first amount of time while the timeline preview is displayed on the screen.

2. A method for providing a user interface, the method comprising:
playing (401) a video;
receiving a user input pressing (402) a screen;
simultaneously playing (403) on a screen a plurality of video sub-streams for the purpose of allowing a user to select a desired video sub-stream;
wherein the plurality of simultaneously played video sub-streams comprises segments of a video taken from different time points such that the plurality of simultaneously played video sub-streams comprise a timeline preview and the video is played in the background of the timeline preview;
wherein the method further comprises receiving a user touch input on one of the simultaneously played video sub-streams, the user touch input being which swiped in a first direction, playing (407) the video on the screen starting from the time point of that video sub-stream and no longer displaying the timeline preview;
wherein the simultaneously played video sub-streams are arranged in the timeline preview in the order of their time points within the video and the different time points are spaced apart within the video by a first amount of time; and
wherein if one of the simultaneously played video sub-streams is pressed (410) by a user and not swiped the method further comprises zooming (409, 411) the timeline preview by reducing the first amount of time to a second amount of time smaller than the first amount of time while the timeline preview is displayed on the screen.

## Patentansprüche

1. Benutzerschnittstelle, wobei, als Reaktion auf einen Benutzer, der sich ein Video anschaut (401) und einen Bildschirm presst (402), ein Bildschirm einer Vielzahl von Video-Sub-Datenströmen gleichzeitig auf dem Bildschirm wiedergegeben (403) wird, zum Zweck einem Benutzer zu erlauben, einen gewünschten Video-Sub-Datenstrom zu selektieren;
wobei die Vielzahl der gleichzeitig wiedergegebenen Video-Sub-Datenströme Segmente eines Videos umfasst, die von verschiedenen Zeitpunkten genommen sind, derart, dass die Vielzahl der gleichzeitig wiedergegebenen Video-Sub-Datenströme eine Zeitachsenvorschau umfasst und das Video im Hintergrund der Zeitachsenvorschau wiedergegeben wird;
wobei, wenn einer der gleichzeitig wiedergegebenen Video-Sub-Datenströme vom Benutzer berührt und in erste Richtung gewischt wird, das Video auf dem Bildschirm, beginnend vom Zeitpunkt jenes Video-Sub-Datenstroms, wiedergegeben wird (407) und die Zeitachsenvorschau nicht länger angezeigt wird;
wobei die gleichzeitig wiedergegebenen Video-Sub-Datenströme in der Zeitachsenvorschau in der Reihenfolge ihrer Zeitpunkte innerhalb des Videos angeordnet sind und die verschiedenen Zeitpunkte innerhalb des Videos um eine erste Zeitdauer beabstandet sind; und
wobei, wenn einer der gleichzeitig wiedergegebenen Video-Sub-Datenströme von einem Benutzer gepresst (410) und nicht gewischt wird, die Zeitachsenvorschau eingerichtet ist, derart gezoomt (409) zu werden, dass die erste Zeitdauer auf eine zweite Zeitdauer reduziert wird, die kleiner als die erste Zeitdauer ist, während die Zeitachsenvorschau auf dem Bildschirm angezeigt wird.

2. Verfahren zur Bereitstellung einer Benutzerschnittstelle, wobei das Verfahren umfasst:
Wiedergabe (401) eines Videos;
Empfangen einer Benutzereingabe durch Pressen (402) eines Bildschirms;
gleichzeitige Wiedergabe (403) auf einem Bildschirm einer Vielzahl von Video-Sub-Datenströmen, um einem Benutzer zu erlauben, einen gewünschten Video-Sub-Datenstrom zu selektieren;
wobei die Vielzahl der gleichzeitig wiedergegebenen Video-Sub-Datenströme Segmente eines Videos umfasst, die von verschiedenen Zeitpunkten genommen sind, derart, dass die Vielzahl der gleichzeitig wiedergegebenen Video-Sub-Datenströme eine Zeitachsenvorschau umfasst und das Video im Hintergrund der Zeitachsenvorschau wiedergegeben wird;
wobei das Verfahren ferner den Empfang einer Benutzer-Toucheingabe auf einem der gleichzeitig wiedergegebenen Video-Sub-Datenströme, wobei die Benutzer-Toucheingabe ist, welche in eine erste Richtung gewischt wurde, Wiedergabe (407) des Videos auf dem Bildschirm beginnend ab dem Zeitpunkt jenes Video-Sub-Datenstroms und nicht längere Anzeige der Zeitachsenvorschau umfasst;
wobei die gleichzeitig wiedergegebenen Video-Sub-Datenströme in der Zeitachsenvorschau in der Reihenfolge ihrer Zeitpunkte innerhalb des Videos angeordnet sind und die verschiedenen Zeitpunkte innerhalb des Videos durch eine erste Zeitdauer beabstandet sind; und
wobei, wenn einer der gleichzeitig wiedergegebenen Video-Sub-Datenströme von einem Benutzer gepresst (410) und nicht gewischt wird, das Verfahren ferner das Zoomen (409, 411) der Zeitachsenvorschau umfasst, indem die erste Zeitdauer auf eine zweite Zeitdauer reduziert wird, die kleiner als die erste Zeitdauer ist, während die Zeitachsenvorschau auf dem Bildschirm angezeigt wird.

## Revendications

1. Une interface utilisateur dans laquelle, en réponse au visionnage par un utilisateur (401) d'une vidéo et à une pression (402) sur un écran, une pluralité de sous-flux vidéos sont diffusés simultanément (403) sur l'écran dans le but de permettre à un utilisateur de sélectionner un sous-flux vidéo souhaité,
où la pluralité de sous-flux vidéos diffusés simultanément comprend des segments d'une vidéo pris à partir de points temporels différents de sorte que la pluralité de sous-flux vidéos diffusés simultanément comprenne une prévisualisation de ligne chronologique et la vidéo est diffusée à l'arrière-plan de la prévisualisation de ligne chronologique,
où, si un des sous-flux vidéos diffusés simultanément est touché par un utilisateur et balayé dans une première direction, la vidéo est diffusée (407) sur l'écran en partant du point temporel de ce sous-flux vidéo et la prévisualisation de ligne chronologique n'est plus affichée,
où les sous-flux vidéos diffusés simultanément sont agencés dans la prévisualisation de ligne chronologique dans l'ordre de leurs points temporels à l'intérieur de la vidéo et les points temporels différents sont espacés à l'intérieur de la vidéo par une première durée, et
où, si un des sous-flux vidéos diffusés simultanément est pressé (410) par un utilisateur et non balayé, la prévisualisation de ligne chronologique est agencée de façon à être zoomée (409) de sorte que la première durée soit réduite à une deuxième durée inférieure à la première durée pendant que la prévisualisation de ligne chronologique est affichée sur l'écran.

2. Un procédé de fourniture d'une interface utilisateur, le procédé comprenant :
la diffusion (401) d'une vidéo,
la réception d'une entrée d'utilisateur effectuant une pression (402) sur un écran,
la diffusion simultanée (403) sur un écran d'une pluralité de sous-flux vidéos dans le but de permettre à un utilisateur de sélectionner un sous-flux vidéo souhaité,
où la pluralité de sous-flux vidéos diffusés simultanément comprend des segments d'une vidéo pris à partir de points temporels différents de sorte que la pluralité de sous-flux vidéos diffusés simultanément comprenne une prévisualisation de ligne chronologique et la vidéo est diffusée à l'arrière-plan de la prévisualisation de ligne chronologique,
où le procédé comprend en outre la réception d'une entrée tactile d'utilisateur sur un des sous-flux vidéos diffusés simultanément, l'entrée tactile d'utilisateur étant balayée dans une première direction, la diffusion (407) de la vidéo sur l'écran en partant du point temporel de ce sous-flux vidéo et l'arrêt de l'affichage de la prévisualisation de ligne chronologique,
où les sous-flux vidéos diffusés simultanément sont agencés dans la prévisualisation de ligne chronologique dans l'ordre de leurs points temporels à l'intérieur de la vidéo et les points temporels différents sont espacés à l'intérieur de la vidéo par une première durée, et
où, si un des sous-flux vidéos diffusés simultanément est pressé (410) par un utilisateur et non balayé, le procédé comprend en outre une opération de zoom (409, 411) sur la prévisualisation de ligne chronologique par la réduction de la première durée vers une deuxième durée inférieure à la première durée pendant que la prévisualisation de ligne chronologique est affichée sur l'écran.
